# EUROPÄISCHE PATENTSCHRIFT

(11) **EP 3 876 062 B1**
(45) Veröffentlichungstag und Bekanntmachung des Hinweises auf die Patenterteilung: **07.06.2023**
(21) Anmeldenummer: 21159843.8
(22) Anmeldetag: 01.03.2021
(51) Int. Cl.: G05B 23/02, G06N 20/00

(54) **VERFAHREN UND RECHENEINHEIT ZUR ÜBERWACHUNG DES ZUSTANDES EINER MASCHINE**
METHOD AND COMPUTER UNIT FOR MONITORING THE CONDITION OF A MACHINE
PROCÉDÉ ET UNITÉ DE CALCUL DESTINÉS À LA SURVEILLANCE DE L'ÉTAT D'UNE MACHINE

(30) Priorität: 06.03.2020 DE 102020202865
(43) Veröffentlichungstag der Anmeldung: 08.09.2021
(73) Patentinhaber: Robert Bosch GmbH, 70442 Stuttgart (DE)
(72) Erfinder: Torikka, Tapio, 97816 Lohr (DE)

(56) Entgegenhaltungen:
- EP-A1- 3 112 960
- EP-A1- 3 330 818
- GB-A- 2 567 850

## Beschreibung

Die vorliegende Erfindung betrifft ein Verfahren zur Überwachung von Betriebszuständen einer Maschine sowie eine Recheneinheit und ein Computerprogramm zu dessen Durchführung, z.B. für die Diagnose von Maschinen bzw. Maschinenkomponenten, z.B. von Hydraulikanlagen, und im Besonderen das Training und die Anwendung von Methoden des maschinellen Lernens, z.B. neuronaler Netze, für diesen Zweck.

### Stand der Technik

Bei der Überwachung von Maschinen bzw. Maschinenkomponenten wird typischerweise eine Vielzahl von Sensordaten erfasst. Dies ist insbesondere bei der industriellen Verwendung der Maschinen der Fall. Im Falle einer Hydraulikanlage können die Sensordaten beispielhaft ausgewählt sein aus Druck und Volumenstrom von Hydraulikflüssigkeiten, Temperaturen von Hydraulikflüssigkeiten oder Maschinenteilen, oder auch Drehmoment, Leistungsabgabe von Motoren. Während eines Referenzbetriebs der Maschine, in dem sich die Maschine in einem nachweislich fehlerfreien Zustand befindet, z.B. neu ist, gewonnene Sensordaten können verwendet werden, um die Betriebszustände der Maschine zu kategorisieren. Fallen dann während des weiteren Betriebs Sensordaten an, die nicht in diese Kategorisierung fallen, so kann ein Fehlerzustand bzw. anomaler Zustand der Maschine erkannt werden.

Zur Kategorisierung der Betriebszustände ist versucht worden, Methoden des maschinellen Lernens anzuwenden. Z.B. wird in der US 2017024649 A1, bei Gasturbinen, oder auch in der US 2017328194 A1, bei auf Ölfeldern eingesetzten Pumpen, ein sogenannter Autoencoder verwendet, um in Sensordaten charakteristische Strukturen zu erkennen, d.h. es wird eine Art dimensionale Reduktion durchgeführt). Die so gewonnenen Charakteristiken werden dann durch einen Klassifikator, der auf maschinellem Lernen basiert, kategorisiert. Standardansätze zur Diagnose der Daten mittels maschinellen Lernens sind hierbei, dass ein fest definierter Zeitraum für das Training verwendet wird, dies ist in beiden vorgenannten Schriften der Fall, oder dass neu anfallende Daten kontinuierlich auf das resultierende Modell angewandt werden.

In industriellen Anwendungen ist ein fest definierter Zeitraum für das Training jedoch nicht optimal. So ist der Betrieb der Maschinen sehr unterschiedlich (Dynamik, Produktionszyklus, Variation in den produzierten Produkten, limitierte Infrastruktur wie z.B. Datenübertragung), auch gibt es keine Regel für den optimalen Trainingszeitraum, ein fest definierter Trainingszeitraum führt zu unzuverlässigen Modellen oder zu einer aufwendigen anwendungsbezogenen Einstellung des Zeitraum.

EP 3112960 A1 betrifft die Anomalieerkennung in einem Wasserversorgungssystem, wobei Parameter eines hydraulischen Modells basierend auf Messdaten angepasst werden und basierend auf den angepassten Parametern eine Klassifizierung in normale oder anormale Zustände mittels maschinellen Lernens erfolgt. EP 3330818 A1 betrifft ein Verfahren zur Zustandsüberwachung von Komponenten einer technischen Anlage, wobei Eingangsdaten, welche aus Sensordaten in gewonnen sind, einem Merkmalsextraktionsverfahren zugeführt werden, welches gemäß einem Deep-Learning Verfahren ausgebildet ist.

### Offenbarung der Erfindung

Erfindungsgemäß werden ein Verfahren zur Überwachung von Betriebszuständen einer Maschine, eine entsprechende Recheneinheit, ein entsprechendes Computerprogramm und ein entsprechendes Speichermedium mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung stellt vorteilhaft ein auf maschinellem Lernen basierendes Verfahren bzw. System bereit, bei dem kein fest definierter Zeitraum für das Training vorgegeben werden muss und das sich an die unterschiedliche Dynamik und die damit einhergehende unterschiedliche Variation der Sensordaten unterschiedlicher Betriebszustände anpasst.

Das Verfahren zur Überwachung von Betriebszuständen einer Maschine, beispielsweise einer Hydraulikanlage, umfasst die folgenden Schritte:
a) Erfassen mindestens eines Betriebsparameters der Maschine während eines Referenzbetriebs der Maschine, um Referenz-Betriebsdaten der Maschine zu erhalten, wobei die Maschine während des Referenzbetriebs mindestens zwei unterschiedliche Referenzzustände einnimmt;
b) Bilden mehrerer Datenblöcke aus den Referenz-Betriebsdaten, die sich jeweils über Daten der Referenz-Betriebsdaten innerhalb unterschiedlicher erster Zeitabschnitte erstrecken;
c) Trainieren eines ersten Modells für Betriebsparameter basierend auf einem ersten Datenblock der mehreren Datenblöcke und Bestimmen (bzw. Festlegen) einer Fehlergrenze des ersten Modells;
d) Anwenden des ersten Modells auf einen zweiten Datenblock der mehreren Datenblöcke und, wenn ein Fehler des ersten Modells bei der Anwendung auf den zweiten Datenblock größer ist als die Fehlergrenze des ersten Modells, Trainieren eines zweiten Modells für Betriebsparameter basierend auf dem zweiten Datenblock und Bestimmen einer Fehlergrenze des zweiten Modells;
e) Definieren eines Modell-Satzes, der das erste und das zweite Modell beinhaltet;
f) Anwenden aller Modelle des Modell-Satzes auf einen weiteren Datenblock der mehreren Datenblöcke und, falls ein Fehler mindestens eines der Modelle aus dem Modell-Satzes bei der Anwendung auf den weiteren Datenblock größer ist als die Fehlergrenze des jeweiligen Modells, Trainieren eines weiteren Modells für Betriebsparameter basierend auf dem weiteren Datenblock, Bestimmen einer Fehlergrenze des weiteren Modells und Hinzufügen des weiteren Modells zu dem Modell-Satzes;
g) Wiederholen des Schrittes f) für alle weiteren Datenblöcke der mehreren Datenblöcke.

Entsprechend diesem vorgeschlagenen Verfahren werden während eines im Prinzip zeitlich nicht festgelegten Referenzbetriebs der Maschine (wobei der Begriff "Maschine" auch Teile einer Maschine einschließen soll) verschiedene Referenzzustände durch jeweils ein entsprechend trainiertes Modell modelliert und zu dem Modell-Satz hinzugefügt. Vorteile hiervon sind, dass einerseits kein fester Zeitraum für das Training vorgegeben werden muss, sondern es muss lediglich sichergestellt werden, dass die Maschine im Referenzbetrieb fehlerfrei läuft, z.B. wenn diese neu ist oder nach einer Wartung; es ist sogar möglich, dass der Referenzbetrieb über mehrere nicht zusammenhängende Zeiträume stattfindet. Und andererseits kann der Modell-Satz und damit das Überwachungsverfahren für beliebig viele unterschiedliche Referenzzustände erweitert werden, es ergibt sich also keine Einschränkung aus der gegebenenfalls im Voraus nicht bekannten Anzahl von Referenzzuständen an das Modell, das zur Modellierung der Referenzzustände verwendet werden soll.

Unter dem Begriff "Modell für Betriebsparameter", in dieser Anmeldung auch "Betriebszustandsmodell" oder vereinfacht "Modell" genannt, ist im Rahmen der Erfindung die Modellierung von Betriebszuständen bzw. von deren gemessenen Betriebsparametern durch einen auf künstlicher Intelligenz bzw. maschinellem Lernen basierenden Algorithmus zu verstehen.

In einem als Training oder Lernen bezeichneten Vorgang generieren Algorithmen des maschinellen Lernens basierend auf Beispieldaten (sogenannten Trainingsdaten) ein mathematisches Modell, um Vorhersagen über einen Vorgang zu machen, ohne dafür explizit programmiert zu sein. Dieses Training kann "überwacht", wenn Fehlerdaten zu den zu machenden Vorhersagen vorhanden sind, oder "unüberwacht", wenn solche Fehlerdaten nicht vorhanden sind, stattfinden. Da für Betriebszustände keine Fehlerdaten vorhanden sind, handelt es sich hier im Prinzip um unüberwachtes Lernen.

Ein Modell kann als eine Abbildung bzw. Funktion betrachtet werden, die Eingabewerte, hier die Betriebsparameter, auf Ausgabewerte abbildet. Um trotz der nicht bekannten Fehlerdaten der Betriebszustände ein effektives Training der Modelle zu ermöglichen, werden im Rahmen dieser Erfindung Modelle betrachtet, die die Betriebszustände so modellieren, dass die Eingabewerte, also die Betriebsparameter, als Ausgabewerte des Modells zurückgewonnen werden, sozusagen rekonstruiert das Modell die Eingabe. Entsprechende Modelle könnten also als "Rekonstruktions-Modell" oder "rekonstruierendes Modell" bezeichnet werden. Ein Fehlermaß kann dann durch einen Vergleich der Ausgabewerte mit den eingegebenen Betriebsparametern erhalten werden. Die Modelle sollten so gewählt sein, dass innerhalb des Modells eine dimensionale Reduktion der Parameter erfolgt (ein Nachbilden der identischen Abbildung ist also nicht möglich). Ein Betriebszustand ist dann sozusagen durch das Modell in einem dimensional reduzierten Raum codiert. Das Modell erzeugt die Ausgabewerte aus diesem dimensional reduzierten Raum, dies kann als Decodierung gesehen werden. Tritt in der überwachten, durch das Modell modellierten Maschine eine Anomalie bzw. Fehlfunktion auf, führt dies zu Abweichungen der Betriebsparameter, die durch die Codierung nicht mehr umfasst sind, so dass die Fehler-Metrik, die als Anomaliemaß dient, erhöht wird.

Vorteilhafterweise können die Modelle künstliche neuronale Netzwerke sein. Diese werden im Weiteren als neuronale Netzwerke bezeichnet. Ein (künstliches) neuronales Netzwerk besteht typischerweise aus in mehreren Schichten angeordneten Knoten, den sogenannten (künstlichen) Neuronen, und gerichteten Kanten, die die Knoten/Neuronen verbinden. Die Ausgabe eines Knotens ist eine Funktion der Eingaben an diesen Knoten (Ein- und Ausgabe sind durch die Richtung der gerichteten Kanten spezifiziert). Spezifischer ist die Ausgabe eine Funktion der gewichteten Summe der Eingaben, wobei die Gewichte den Kanten zugeordnet sind. Bevorzugt weisen die neuronalen Netze die gleiche Struktur auf, d.h. die Struktur bzw. Topologie des aus Knoten und gerichteten Kanten gebildeten neuronalen Netzwerks, wenn man neuronale Netzwerke als gerichtete Graphen auffasst, ist für alle Modelle dieselbe. Die Modelle unterscheiden sich dann nur in den Kanten zugeordneten Gewichten und basieren auf dem gleichen neuronalen Netzwerk. Das neuronale Netzwerk ist weiter bevorzugt ein Autoencoder.

Eine andere Möglichkeit sind Modelle, die auf einer Hauptkomponentenanalyse (Principal Component Analysis, PCA) beruhen.

Ein Autoencoder ist ein neuronales Netzwerk mit mindestens drei Schichten, einer Eingabeschicht, einer oder mehreren verdeckten Schichten und einer Ausgabeschicht, wobei die Neuronen der Ausgabeschicht die gleiche Bedeutung aufweisen wie die Neuronen der Eingabeschicht. Im vorliegenden Fall heißt dies, dass einem Neuron der Eingabeschicht, in das ein Betriebsparameter eingegeben wird (z.B. ein Druck p), ein Neuron in der Ausgabeschicht gegenübersteht, an dem dieser Parameter wieder als Ausgabe erhalten werden soll (z.B. als Druck p'). Zwischen der Eingabeschicht und der Ausgabeschicht, d.h. in der mindestens einen verdeckten Schicht, wird durch geeignete Maßnahmen eine dimensional reduzierte Repräsentation der Eingabewerte, bzw. des Zustands, den diese charakterisieren, erreicht. Es findet also im Modell eine Art Codierung, in der mindestens einen verdeckten Schicht zusammen mit der Eingabeschicht, gefolgt von einer Decodierung, in der mindestens einen verdeckten Schicht zusammen mit der Ausgabeschicht, statt. Geeignete Maßnahmen, um die dimensionale Reduktion zu erreichen, sind beispielsweise eine Zwischenschicht mit deutlich weniger Neuronen als die Ein- und Ausgabeschicht oder Nebenbedingungen beim Training an die Aktivität der Neuron in einer Zwischenschicht, die dafür sorgen, dass nur wenige der Neuronen gleichzeitig aktiv sind (im englischen Sprachgebrauch als "sparse autoencoder" bezeichnet).

Erfindungsgemäß umfasst das Verfahren weiterhin:
h) Erfassen des mindestens einen Betriebsparameters der Maschine in einem Regelbetrieb, der vom Referenzbetrieb verschieden ist, um Regel-Betriebsdaten der Maschine zu erhalten, und Bilden mindestens eines dritten Datenblocks aus den Regel-Betriebsdaten, der sich über Daten der Regel-Betriebsdaten mindestens eines zweiten Zeitabschnitts erstreckt;
i) Anwenden aller Modelle des Modell-Satzes auf den mindestens einen dritten Datenblock und Bestimmen, dass ein anomalen Zustand der Maschine vorliegt, wenn für jedes der Modelle des Modell-Satzes ein Fehler bei der Anwendung auf den mindestens einen dritten Datenblock größer als die Fehlergrenze des jeweiligen Modells ist.

Weiter bevorzugt umfasst der Schritt i) das Ausgeben, dass ein anomaler Zustand der Maschine vorliegt, wenn bestimmt wurde, dass ein anomaler Zustand vorliegt.

Entsprechend dieser Ausführungsform können während des Regelbetriebs der Maschine, d.h. während eines regulären bzw. normalen Betriebs der Maschine, in dem diese nicht notwendigerweise fehlerfrei läuft, auftretende Fehlfunktionen bzw. anomale Zustände erkannt werden, da erkannt wird, dass der durch die Betriebsparameter des dritten Datenblocks charakterisierte Zustand der Maschine keinem der Referenzzustände entspricht.

Bevorzugt können sich die unterschiedlichen ersten Zeitabschnitte und/oder der mindestens eine zweite Zeitabschnitt jeweils über die gleiche vorbestimmte Zeitdauer erstrecken. Dies führt dazu, dass die Datenblöcke jeweils Betriebsdaten über die gleiche Zeitdauer, bzw. über den gleichen Zeitraum, enthalten, also gleich groß sind. So wird erreicht, dass beim Training der Modelle und bei der späteren Analyse von Betriebszuständen keine inhomogen Ergebnisse aufgrund unterschiedlich großer Datenblöcke erhalten werden.

Gemäß einer bevorzugten Ausführungsform sind die unterschiedlichen ersten Zeitabschnitte so gewählt, dass sie sich nicht überschneiden. Gemäß einer anderen Ausführungsform können sich einige der unterschiedlichen ersten Zeitabschnitte jeweils überschneiden.

Gemäß einer weiteren bevorzugten Ausführungsform erfolgt das Bestimmen der Fehlergrenzen der Modelle, indem jeweils die Fehlergrenze eines Modells als ein Vielfaches eines Fehlers bei Anwendung des Modells auf den Datenblock, mit dem es trainiert wurde, festgelegt wird, wobei das Vielfache bevorzugt das 5-fache, weiter bevorzugt das 10-fache ist.

Entsprechend dieser Ausführungsform wird jedem der Modelle eine individuelle Fehlergrenze zugewiesen. Dadurch kann automatisch berücksichtigt werden, dass unterschiedliche Referenzzustände unterschiedlich starke Schwankungen in den Betriebsparametern aufweisen können und also unterschiedlich genau durch die Modelle modelliert werden können. Eine kleinere Fehlergrenze führt dazu, dass der entsprechende Referenzzustand enger gegen andere Betriebszustände abgegrenzt ist.

Gemäß einer weiteren Ausführungsform kann das Verfahren ein Ausgeben der bestimmten Fehlergrenze mindestens eines Modells des Modell-Satzes, bevorzugt aller Modelle, umfassen. Die Fehlergrenzen können zur Konsistenzprüfung herangezogen werden, wenn z.B. die Fehlergrenze eines der Modelle deutlich größer als die Fehlergrenzen aller anderen Modelle ist, kann dies ein Hinweis darauf sein, dass einer der Referenzzustände nicht korrekt modelliert wurde, oder etwa auf einem Datenblock basiert, der fehlerhaft Betriebsdaten enthielt.

Weiterhin kann das Verfahren ein Entfernen bzw. Löschen eines Modells aus dem Modell-Satz umfassen. Dies kann z.B. hilfreich sein, wenn erkannt wird, dass das Modell keinen Referenzzustand modelliert, etwa wie vorstehend beschrieben, oder auch, wenn bei einer Kontrolle (mit weiteren Referenz-Betriebsdaten oder anderen Zeitspannen bei der Definition der Datenblöcke) festgestellt wird, dass die Maschine diesen niemals einnimmt.

Der Modell-Satz, wird in einem der vorstehenden erfindungsgemäßen erhalten. Ein maschinenlesbares Speichermedium für Modell-Sätze kann den Modell-Satz speichern. Diese Ausführungen ermöglichen es einem Hersteller der Maschine, einen im Voraus erstellten Modell-Satz zusammen mit der Maschine auszuliefern und zu installieren, so dass bereits mit Inbetriebnahme beim Kunden eine Überwachung von Betriebszuständen erfolgen kann.

Die erfindungsgemäße Recheneinheit, z.B. ein mit einer Hydraulikanlage verbundener Computer, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger, d.h. maschinenlesbare Speichermedien, zur Bereitstellung des Computerprogramms und/oder zur Bereitstellung des Modell-Satzes sind insbesondere magnetische, optische und elektrische Speicher, wie z.B. Festplatten, Flash-Speicher, EEPROMs, DVDs u.a.m. Auch ein Download des Computerprogramms und/oder des Modell-Satzes über Computernetze (Internet, Intranet usw.) ist möglich.

Das Verfahren kann insbesondere auf einem entfernten Computer oder Computersystem durchgeführt werden. Das Computerprogramm bzw. Computerprogrammprodukt kann dementsprechend insbesondere programmiert sein (d.h. dazu eingerichtet sein), auf einem entfernten Computer oder Computersystem durchgeführt zu werden. "Entfernt" ist hier so zu verstehen, dass der Computer oder das Computersystem nicht in die zu überwachende Maschine integriert ist und sich im Allgemeinen auch nicht in der Nähe derselben befindet, z.B. nicht einer Fabrik in der sich die Maschine befindet. Es kann sich also um einen entfernten Server, insbesondere einen sogenannten Cloud-Server handeln, der über ein Netzwerk, z.B. das Internet und/oder ein Intranet, mit der Maschine bzw. den Sensoren, die Betriebsparameter erfassen, verbunden ist. In diesem Fall kann das Computerprogramm bzw. Computerprogrammprodukt insbesondere programmiert sein, eine sichere Kommunikationsverbindung zur Übertragung von Daten, insbesondere den erfassten Betriebsparametern, zwischen der zu überwachenden Maschine bzw. einer Anlage (Fabrik), in der die Maschine betrieben wird, bzw. den Sensoren, die Betriebsparameter erfassen, und dem entfernten Computer oder Computersystem bereitzustellen. Das kann beispielsweise durch eine verschlüsselte Datenübertragung oder ein virtuelles privates Netzwerk (VPN, virtual private network) geschehen. Entsprechend kann das Verfahren ein Bereitstellen einer sicheren Kommunikationsverbindung zwischen der zu überwachenden Maschine bzw. einer Anlage, in der die Maschine betrieben wird, bzw. den Sensoren, die Betriebsparameter erfassen, und einem entfernten Computer oder Computersystem umfassen.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

Figur 1 zeigt ein Ablaufdiagramm einer bevorzugten Ausführungsform des Verfahrens zur Überwachung von Betriebszuständen einer Maschine gemäß der Erfindung;
Figur 2 zeigt eine schematische Darstellung eines Autoencoders, welcher zur Verwendung mit der Erfindung besonders geeignet ist;
Figur 3 zeigt eine schematische Darstellung eines Systems, in dem eine erfindungsgemäße Recheneinheit zur Überwachung von Betriebszuständen einer Maschine verwendet wird.

### Detaillierte Beschreibung der Zeichnung

Zur Vereinfachung der nachfolgenden Beschreibung der Figuren werden zunächst einige allgemeine Begriffe und Verfahrensweisen, die bei der Erfindung implementiert werden können, erläutert. Diese Erläuterungen sind dann jeweils auch im konkreten Kontext der Figuren gültig.

Beim Betrieb der Maschine (bzw. Maschinenkomponente) werden, bevorzugt in regelmäßigen Zeitabständen, Betriebsparameter der Maschine erfasst, um Betriebsdaten zu erhalten. Die Betriebsparameter werden typischerweise durch Sensoren erfasst, es kann sich aber auch um vorgegebene, etwa durch die Steuerung der Maschine, Parameter handeln. Weiter ist es möglich, dass die Betriebsdaten bereits vorverarbeitete Daten umfassen, etwa Werte einer schnellen Fourier-Transformation (FFT) regelmäßiger Messwerte. Bevorzugt werden die Betriebsdaten mit einer bestimmten Frequenz, die weiter bevorzugt im Bereich von 1 Hz bis 1 kHz liegt, erfasst.

Die Betriebsdaten, die zu einem bestimmten Zeitpunkt oder innerhalb einer Zeitspanne erfasst werden, bilden einen Datensatz. Die Datenblöcke umfassen entsprechend eine Vielzahl von zeitlich aufeinanderfolgenden Datensätzen. Werden die Betriebsdaten mit einer bestimmten Frequenz erfasst, d.h. zu bestimmten regelmäßig beabstandeten Zeitpunkten, so kann z.B. ein Datensatz jeweils die an einem dieser Zeitpunkte erfassten Betriebsdaten umfassen. Es ist aber auch möglich, dass ein Datensatz jeweils die Betriebsdaten, die an allen Zeitpunkten innerhalb einer bestimmten Zeitspanne erfasst wurden, umfasst, wobei es auch möglich ist, dass sich die Zeitspannen, die zu aufeinanderfolgenden Datensätzen gehören überlappen. Dies ist hilfreich, wenn zeitliche Abhängigkeiten mit dem Modell erkannt werden sollen. Jeder Datensatz enthält also die zu einem bestimmten Zeitpunkt bzw. in einer bestimmten Zeitspanne erfassten Betriebsparameter. Verschiedene Datensätze beziehen sich lediglich auf verschiedene Zeitpunkte bzw. Zeitspannen, d.h. verschiedene Datensätze umfassen jeweils die gleichen Betriebsparameter, die zu verschiedenen Zeitpunkten bzw. in verschiedenen Zeitspannen erfasst wurden, die also im Allgemeinen verschiedene Werte aufweisen.

Die Modellierung erfolgt auf Grundlage dieser Datensätze. Ein Modell bildet jeden Datensatz, genauer die Werte der im Datensatz enthaltenen Betriebsparameter, auf eine zugehörige Ausgabe ab. Die in einem Datensatz umfassten Betriebsparameter sind also die Eingabeparameter der Modelle. Wird ein neuronales Netzwerk verwendet, entspricht jedes der Neuronen der Eingabeschicht einem Betriebsparameter der Datensätze, die Anzahl der Neuronen der Eingabeschicht entspricht also der Anzahl von Betriebsparametern in einem Datensatz.

Bei Anwendung des Modells auf einen Datensatz bzw. einen Datenblock, was so zu verstehen ist, dass das Modell auf alle im Datenblock enthaltenen Datensätze angewandt wird, wird durch ein Fehlermaß ein Fehler des Modells bestimmt. Beim Training des Modells wird das Modell iterativ so geändert, dass dieser Fehler minimiert wird. Dabei kann das Training solange durchgeführt werden, bis eine bestimmte Anzahl N von Iterationen erfolgt ist, etwa N=1000, und/oder bis der Fehler unter einen vorgegebenen maximalen Fehlerwert fällt.

Für die in dieser Anmeldung bevorzugt verwendeten Modelle, die versuchen die Einzelwerte der Eingabe als Ausgabewerte zu rekonstruieren (unter zwischenzeitlicher dimensionaler Reduktion) kann als Fehlermaß beispielsweise die Wurzel des mittleren quadratischen Fehlers der Einzelwerte verwendet werden, was sowohl für einen Datensatz, als auch für einen mehrere Datensätze umfassenden Datenblock berechnet werden kann. Ebenso kann ein anderes dem Fachmann auf dem Gebiet des maschinellen Lernens bekanntes geeignetes Fehlermaß verwendet werden.

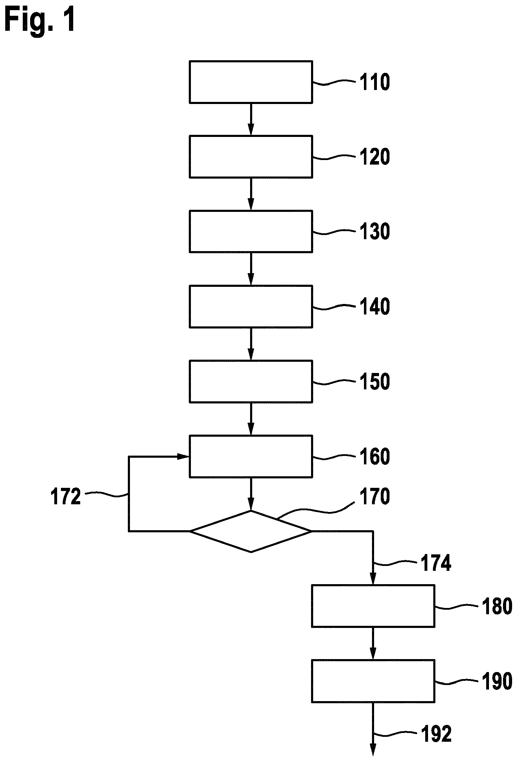

Figur 1 stellt ein Ablaufdiagramm gemäß einer beispielhaften Ausführungsform des erfindungsgemäßen Verfahrens zur Überwachung von Betriebszuständen einer Maschine dar.

Zunächst wird in Schritt 110 mindestens ein Betriebsparameter der Maschine während eines Referenzbetriebs der Maschine erfasst, wobei die Maschine während des Referenzbetriebs mindestens zwei unterschiedliche Referenzzustände einnimmt. Auf diese Weise werden Referenz-Betriebsdaten der Maschine für mindestens zwei Referenz-Betriebszustände der Maschine erhalten. Als Referenzbetrieb bzw. Referenzzustand soll ein Betriebszustand der Maschine gelten, in dem die Maschine fehlerfrei läuft, etwa wenn sich diese im neuen Zustand befindet.

Aus den erfassten Referenz-Betriebsdaten werden in Schritt 120 mehrere Datenblöcke gebildet, die sich jeweils über Daten der Referenz-Betriebsdaten innerhalb unterschiedlicher erster Zeitabschnitte erstrecken. Die Bildung von Datenblöcken wurde bereits weiter oben beschrieben. Die unterschiedlichen ersten Zeitabschnitte weisen bevorzugt alle die gleiche Zeitdauer auf. Die unterschiedlichen ersten Zeitabschnitte können sich überschneiden, oder auch disjunkt sein.

In Schritt 130 wird ein erstes Modell für Betriebsparameter basierend auf einem ersten Datenblock der mehreren Datenblöcke trainiert und, für das trainierte erste Modell, eine Fehlergrenze bestimmt. Dieses erste Modell modelliert sozusagen einen der mindestens zwei unterschiedlichen Referenzzustände während des Referenzbetriebs. Solange ein Fehler (bei Anwendung des ersten Modells auf einen Datenblock) innerhalb der Fehlergrenze des ersten Modells liegt, wird davon ausgegangen, dass sich die Maschine in diesem Referenzzustand befindet.

Im weiteren Schritt 140 wird das erste Modell auf einen zweiten Datenblock der mehreren Datenblöcke angewendet. Wenn ein Fehler des ersten Modells bei der Anwendung auf den zweiten Datenblock größer ist als die Fehlergrenze des ersten Modells, wird in diesem Schritt ein zweites Modells für Betriebsparameter basierend auf dem zweiten Datenblock trainiert und eine Fehlergrenze des zweiten Modells bestimmt. Dieses zweite Modell modelliert, zusammen mit seiner Fehlergrenze, sozusagen einen zweiten der mindestens zwei Referenzzustände.

In Schritt 150 wird ein Modell-Satz, d.h. ein Satz bzw. eine Gruppe von Modellen, definiert, der das erste und das zweite Modell beinhaltet.

In Schritt 160 werden alle Modelle, die im Modell-Satz enthalten sind, auf einen weiteren (d.h. auf einen vom ersten und zweiten verschiedenen) Datenblock der mehreren Datenblöcke angewandt. Falls ein Fehler mindestens eines der Modelle aus dem Modell-Satz bei der Anwendung auf den weiteren Datenblock größer ist als die Fehlergrenze des jeweiligen Modells, wird ein weiteres Modell für Betriebsparameter basierend auf diesem weiteren Datenblock trainiert. Dies kann auftreten, wenn neben den zwei Referenzzuständen, die bereits durch die Modelle im Modell-Satz modelliert sind, weitere Referenzzustände in den Referenz-Betriebsdaten umfasst sind. Ebenso wird dann in diesem Schritt eine Fehlergrenze des weiteren Modells bestimmt und das weitere Modell wird zu dem Modell-Satz hinzugefügt.

In Schritt 170 wird geprüft, ob der vorherige Schritt 160 bereits für alle Datenblöcke der mehreren Datenblöcke durchgeführt wurde. Falls dies nicht der Fall ist, 172, wird zu Schritt 160 zurückgegangen und der Schritt 160 wird mit einem der Datenblöcke durchgeführt, für den Schritt 160 noch nicht durchgeführt wurde.

Falls andererseits der vorherige Schritt 160 bereits für alle Datenblöcke der mehreren Datenblöcke durchgeführt wurde, 174, heißt dies, dass alle in den Referenz-Betriebsdaten umfassten Referenzzustände gefunden wurden und durch ein jeweiliges Modell im Modell-Satz modelliert werden. In diesem Fall kann mit den optionalen Schritten 180 und 190 fortgefahren werden.

In Schritt 180 wird der mindestens eine Betriebsparameter der Maschine in einem Regelbetrieb, der vom Referenzbetrieb verschieden ist, erfasst, um Regel-Betriebsdaten der Maschine zu erhalten. Regelbetrieb ist hier so zu verstehen, dass es sich hierbei um einen regulären bzw. normalen Betrieb der Maschine handelt, während dem nicht davon ausgegangen werden kann, dass die Maschine fehlerfrei läuft, dass also während des Regelbetriebs anomale Zustände auftreten können. Weiter wird mindestens ein dritter Datenblock aus den Regel-Betriebsdaten gebildet, der sich über Daten der Regel-Betriebsdaten mindestens eines zweiten Zeitabschnitts erstreckt.

In Schritt 190 werden alle Modelle des Modell-Satzes auf den mindestens einen dritten Datenblock angewendet und bestimmt, dass ein anomaler Zustand der Maschine vorliegt, wenn für jedes der Modelle des Modell-Satzes ein Fehler bei der Anwendung auf den mindestens einen dritten Datenblock größer als die Fehlergrenze des jeweiligen Modells ist. Durch dieses Vorgehen wird geprüft, ob der durch den dritten Datenblock charakterisierte Betriebszustand in den Bereich eines der Referenzzustände fällt, was sich darin äußern würde, dass das Modell aus dem Modell-Satz, das den Referenzzustand modelliert, bei Anwendung auf den dritten Datenblock einen Fehler ergibt, der innerhalb der Fehlergrenze dieses Modells liegt. Wird kein solches Modell gefunden, muss von einem anomalen Zustand der Maschine ausgegangen werden. Weiter ist es dann möglich, auszugeben, 192, dass ein anomaler Zustand der Maschine vorliegt.

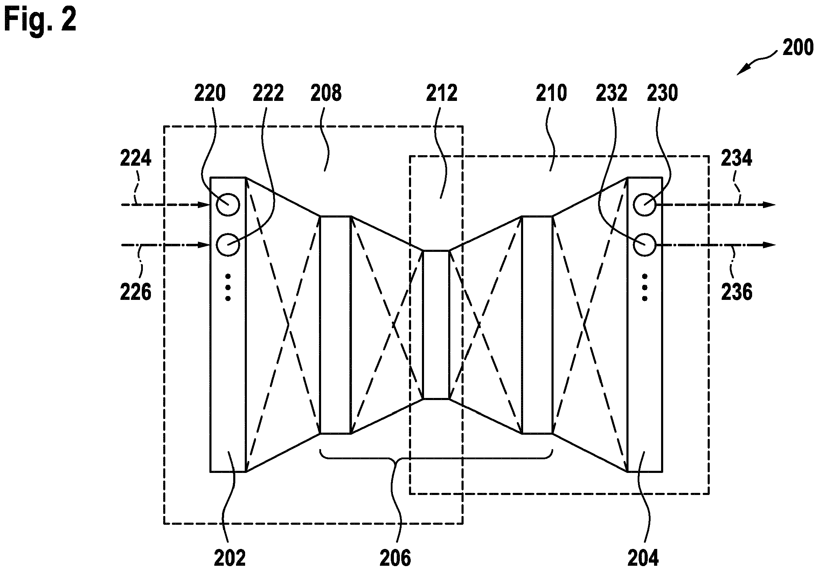

Figur 2 stellt einen Autoencoder schematisch dar, der gemäß einer bevorzugten Ausführungsform bei der Modellierung der Betriebszustände verwendet werden kann. Der Autoencoder 200 weist eine Eingabeschicht 202, eine Ausgabeschicht 204 und mehrere verdeckte Schichten 206 (in Figur 2 sind beispielhaft drei verdeckte Schichten gezeigt, es ist aber auch eine andere Anzahl möglich) auf. Jede der Schichten 202, 204, 206 umfasst ein oder mehrere Neuronen (von denen in Figur 2 nur einige Neuronen 220, 222, 230, 232 dargestellt sind). Die Neuronen der Ausgabeschicht 204 haben die gleiche Bedeutung wie die Neuronen der Eingabeschicht 202, d.h. die Werte an der Ausgabeschicht sollen den an der Eingabeschicht eingegebenen Werten entsprechen. Die Schichten 202, 204, 206, genauer die in den Schichten enthaltenen Neuronen, sind untereinander durch nicht weiter dargestellte (gewichtete) Kanten verbunden. Der Autoencoder codiert die Eingaben auf einer Codier-Seite 208 und decodiert sie auf einer Decodier-Seite 210 des Autoencoders 200. In einer oder in mehreren der verdeckten Schichten 206 wird ein Code gebildet, der die Eingabedaten in einer dimensional reduzierten Form repräsentiert.

Beim Training werden die Gewichte des Autoencoders, der ein neuronales Netz ist, so angepasst, dass die an den Neuronen der Ausgabeschicht 204 ausgegebenen Ausgabewerte möglichst nah an den Eingabewerten, die die gleiche Bedeutung haben, liegen. Dazu werden die Gewichte so geändert, dass ein geeignetes Fehlermaß minimiert wird. Als Fehlermaß kann etwa die Wurzel des mittleren quadratischen Fehlers der Einzelwerte verwendet werden.

Beispielhaft sind in Figur 2 in der Eingabeschicht 202 Eingabe-Neuronen 220, 222 und in der Ausgabeschicht 204 Ausgabe-Neuronen 230, 232 dargestellt. Umfassen die Datensätze etwa Messungen von Druck und Temperatur, wird der Wert des Druckes p an einem der Eingabe-Neuronen 220 eingegeben, symbolisiert durch einen Pfeil 224, und der Wert der Temperatur T am anderen Eingabe-Neuron 222 eingegeben, symbolisiert durch einen Pfeil 226. Der Autoencoder (also das Modell) bildet diese an den Eingabe-Neuronen eingegebenen Eingabewerte und weitere nicht dargestellte Eingabewerte, die weiteren Betriebsparametern in den Datensätzen entsprechen, auf Ausgabewerte an den Ausgabe-Neuronen 230, 232 ab. Hierbei soll an einem Ausgabe-Neuron 230 ein dem Druck entsprechender Wert p' ausgegeben werden, symbolisiert durch einen Pfeil 234, und am anderen Ausgabe-Neuron 232 ein der Temperatur entsprechender Wert T' ausgegeben werden, symbolisiert durch einen Pfeil 236. Der Autoencoder wird so trainiert, dass die Ausgabewerte p', T', und weitere nicht dargestellte Ausgabewerte, möglichst nahe bei den entsprechenden Eingabewerten p, T liegen, d.h. der Rekonstruktionsfehler soll bezüglich eines geeigneten Fehlermaßes möglichst klein sein.

Da die Messwerte, d.h. die Zahlenwerte, die letztendlich als Eingabewerte für das Modell dienen sollen, für unterschiedliche Betriebsparameter im Allgemeinen unterschiedliche Grö-ßenwerte und unterschiedliche Bandbreiten aufweisen, können diese Messwerte - bevor ein Modell auf diese angewandt wird - normalisiert werden, d.h. sie sollten so in Datenwerte, die als Eingabe für das Modell dienen sollen, geändert werden, dass die Datenwerte für unterschiedliche Betriebsparameter alle innerhalb eines gemeinsamen Wertebereichs, etwa von 0 bis 1, oder von -1 bis +1, liegen. Diese Normalisierung umfasst typischerweise eine Normierung und eine Skalierung der Datenwerte. Dies ist insbesondere vorteilhaft, da dann bei der Berechnung des Rekonstruktionsfehlers unterschiedliche Betriebsparameter nicht unterschiedlich behandelt werden müssen. Ein weiterer Vorteil liegt darin, dass die Verwendung verschiedener Einheiten bei der Messung eines Betriebsparameters (bei einer Temperaturmessung etwa °C, K, oder °F) nicht zu verschiedenen Ergebnissen führt.

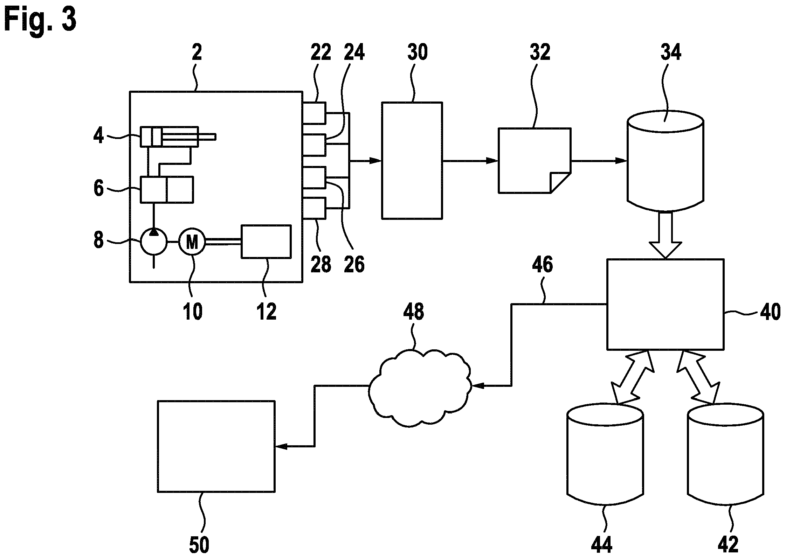

Figur 3 zeigt ein beispielhaftes System, in dem eine erfindungsgemäße Recheneinheit zur Überwachung von Betriebszuständen einer Maschine 2, hier eine Hydraulikanlage, verwendet wird. Die Maschine 2 umfasst einen Hydraulikzylinder 4, der über ein Wegeventil 6 gesteuert wird, wobei der Hydraulikdruck durch eine Pumpe 8 erzeugt wird, die durch einen Motor 10 angetrieben wird, der durch eine Motorsteuerung 12 mit Energie versorgt wird. Weiter sind mehrere Sensoren 22, 24, 26, 28 vorgesehen, die Betriebsparameter dieser Maschinenteile erfassen. Dies sind z.B. ein Drucksensor 22, der einen Druck p der Hydraulikflüssigkeit erfasst, ein Sensor 24, der die Stellung des Zylinderkolbens bzw. das Zylindervolumen erfasst, ein Sensor 26, der das Motordrehmoment erfasst, und ein Temperatursensor 28. Selbstverständlich können beliebige weitere oder andere Sensoren vorgesehen sein, z.B. um einen Volumenfluss der Hydraulikflüssigkeit, eine Stellung des Wegeventils, eine Motordrehzahl, Temperaturen der einzelnen Teile und der Hydraulikflüssigkeit, oder ähnliche, für den Betrieb der Maschinen relevante Parameter, zu erfassen.

Weiter ist ein Gateway 30 dargestellt, das aus den erfassten Betriebsparametern Datensätze bildet und möglicherweise eine Vorverarbeitung der erfassten Betriebsparameter vornehmen kann. Die Vorverarbeitung kann etwa eine Normalisierung und/oder Filterung der gemessenen Werte der Betriebsparameter umfassen. Ebenso können während der Vorverarbeitung abgeleitete Größen aus den erfassten Betriebsparametern bestimmt werden, etwa die Differenz zweier Parameterwerte oder eine schnelle Fourier-Transformation (FFT) gebildet werden. Die durch das Gateway gebildeten Datensätze sollten für die Eingabe an den Modellen geeignet sein, d.h. eine Form aufweisen, so dass die Modelle darauf angewendet werden können. Die so gebildeten Datensätze werden in einem Betriebsdaten-Speicher 34 gespeichert.

Eine Recheneinheit 40 ist für die Verarbeitung der Datensätze vorgesehen. Die Recheneinheit 40 ist konfiguriert, ein erfindungsgemäßes Verfahren zur Überwachung von Betriebszuständen einer Maschine durchzuführen. Die Recheneinheit 40 kann z.B. mindestens einen Prozessor mit einem oder mehreren Prozessorkernen und einen Speicher umfassen (beides nicht gezeigt). Der Speicher der Recheneinheit 40 beinhaltet in diesem Fall ein Computerprogramm, das, wenn es vom Prozessor ausgeführt wird, diesen dazu veranlasst, das Verfahren zur Überwachung von Betriebszuständen durchzuführen.

Weiterhin ist in dem beispielhaften System ein Modell-Speicher 42 vorgesehen, in dem trainierte Modelle gespeichert werden können. Insbesondere können dort die neuronalen Netze in Form der trainierten Gewichte, die das neuronale Netz charakterisieren, gespeichert werden. Ebenso kann kein Ergebnis-Speicher 44 vorgesehen sein, in dem Ergebnisse, die bei der Betriebszustand-Überwachung (d.h. ob ein anomaler Zustand vorliegt, oder nicht) gewonnen werden, gespeichert werden können.

Der Betriebsdaten-Speicher 34, der Modell-Speicher 42 und der Ergebnis-Speicher 44 können jeweils in einem einzelnen Speicher, oder auch in einem gemeinsamen Speicher (entweder alle drei oder zumindest zwei der Speicher) realisiert sein.

An der Recheneinheit 40 ist weiterhin eine Ausgabe 46 vorgesehen, über die Ergebnisse der Betriebszustand-Überwachung ausgegeben werden können. Insbesondere kann ausgegeben werden, wenn ein anomaler Zustand erkannt wird. Die Ausgabe kann über ein drahtgebundenes oder drahtloses Netzwerk 48 (etwa einen Feldbus in einer Industrieanlage) an ein Ausgabe-Terminal 50 übermittelt werden, an dem z.B. einem Bediener der Maschine 2 der Zustand der Maschine angezeigt wird, ob also ein anomaler Zustand der Maschine vorliegt.

Das Gateway 30 und die Recheneinheit 40 können getrennt oder als eine einzelne Recheneinheit ausgeführt sein.

Die Recheneinheit 40 und/oder das Gateway 30 können sich auch entfernt von der zu überwachenden Maschine befinden, d.h. in Form eines entfernten Computers oder Computersystems realisiert sein (etwa als entfernter Server oder Cloud-Server), der/das über ein geeignetes Netzwerk, z.B. über das Internet und/oder ein Intranet, mit der Maschine bzw. einer Anlage in der sich die Maschine befindet, bzw. den Sensoren, die Betriebsparameter erfassen, zur Datenübertragung verbunden ist. Bevorzugt befindet sich das Gateway 30 in der Nähe der Maschine und die Recheneinheit 40 entfernt von der Maschine. Ebenso können die Daten auf einem entfernten Computer oder Computersystem gespeichert werden, d.h. der Betriebsdaten-Speicher 34, der Modell-Speicher 42 und/oder der Ergebnis-Speicher 44 können jeweils (unabhängig voneinander) als entfernter Speicher oder als entferntes Speichersystem, etwa ein Cloud-Speicher, realisiert sein. Diese können über ein geeignetes Netzwerk, z.B. über das Internet und/oder ein Intranet, mit der Maschine bzw. den Sensoren, die Betriebsparameter erfassen, oder dem Gateway verbunden sein.

## Patentansprüche

1. Verfahren zur Überwachung von Betriebszuständen einer Maschine mittels Modellen für Betriebsparameter, die Betriebszustände so modellieren, dass als Eingabewerte verwendete Betriebsparameter als Ausgabewerte des Modells zurückgewonnen werden, wobei ein Fehlermaß durch einen Vergleich der Ausgabewerte mit den eingegebenen Betriebsparametern erhalten wird, wobei bei einem Training eines Modells das Modell iterativ so geändert wird, dass ein durch das Fehlermaß bestimmter Fehler minimiert wird, umfassend die Schritte
a) Erfassen mindestens eines Betriebsparameters der Maschine während eines Referenzbetriebs der Maschine, um Referenz-Betriebsdaten der Maschine zu erhalten, wobei die Maschine während des Referenzbetriebs mindestens zwei unterschiedliche Referenzzustände einnimmt (110);
b) Bilden mehrerer Datenblöcke aus den Referenz-Betriebsdaten, die sich jeweils über Daten der Referenz-Betriebsdaten innerhalb unterschiedlicher erster Zeitabschnitte erstrecken (120);
c) Trainieren eines ersten Modells für Betriebsparameter basierend auf einem ersten Datenblock der mehreren Datenblöcke und Bestimmen einer Fehlergrenze des ersten Modells (130);
d) Anwenden des ersten Modells auf einen zweiten Datenblock der mehreren Datenblöcke und, wenn ein Fehler des ersten Modells bei der Anwendung auf den zweiten Datenblock größer ist als die Fehlergrenze des ersten Modells, Trainieren eines zweiten Modells für Betriebsparameter basierend auf dem zweiten Datenblock und Bestimmen einer Fehlergrenze des zweiten Modells (140);
e) Definieren eines Modell-Satzes, der das erste und das zweite Modell beinhaltet (150);
f) Anwenden aller Modelle des Modell-Satzes auf einen weiteren Datenblock der mehreren Datenblöcke und, falls ein Fehler mindestens eines der Modelle aus dem Modell-Satz bei der Anwendung auf den weiteren Datenblock größer ist als die Fehlergrenze des jeweiligen Modells, Trainieren eines weiteren Modells für Betriebsparameter basierend auf dem weiteren Datenblock, Bestimmen einer Fehlergrenze des weiteren Modells und Hinzufügen des weiteren Modells zu dem Modell-Satzes (160);
g) Wiederholen des Schrittes f) für alle weiteren Datenblöcke der mehreren Datenblöcke;
h) Erfassen des mindestens einen Betriebsparameters der Maschine in einem Regelbetrieb, der vom Referenzbetrieb verschieden ist, um Regel-Betriebsdaten der Maschine zu erhalten, und Bilden mindestens eines dritten Datenblocks aus den Regel-Betriebsdaten, der sich über Daten der Regel-Betriebsdaten mindestens eines zweiten Zeitabschnitts erstreckt (180);
i) Anwenden aller Modelle des Modell-Satzes auf den mindestens einen dritten Datenblock und Bestimmen, dass ein anomaler Zustand der Maschine vorliegt, wenn für jedes der Modelle des Modell-Satzes ein Fehler bei der Anwendung auf den mindestens einen dritten Datenblock größer als die Fehlergrenze des jeweiligen Modells ist (190).

2. Verfahren nach Anspruch 1, wobei der Schritt i) umfasst:
Ausgeben (192), dass ein anomaler Zustand der Maschine vorliegt, wenn bestimmt wurde, dass ein anomaler Zustand vorliegt.

3. Verfahren nach einem der vorstehenden Ansprüche, wobei die unterschiedlichen ersten Zeitabschnitte und/oder der mindestens eine zweite Zeitabschnitt sich jeweils über die gleiche vorbestimmte Zeitdauer erstrecken.

4. Verfahren nach einem der vorstehenden Ansprüche, wobei das Bestimmen der Fehlergrenze der Modelle erfolgt, indem die Fehlergrenze als ein Vielfaches eines Fehlers bei Anwendung dieses Modells auf den Datenblock, mit dem es trainiert wurde, festgelegt wird, wobei das Vielfache bevorzugt das 5-fache, weiter bevorzugt das 10-fache ist.

5. Verfahren nach einem der vorstehenden Ansprüche, weiterhin umfassend
Ausgeben der bestimmten Fehlergrenze mindestens eines Modells des Modell-Satzes, bevorzugt aller Modelle.

6. Verfahren nach einem der vorstehenden Ansprüche, weiterhin umfassend
Entfernen eines der Modelle aus dem Modell-Satz.

7. Verfahren nach einem der vorstehenden Ansprüche, wobei es sich bei den Modellen um künstliche neurale Netze, bevorzugt um Autoencoder, handelt; wobei sich bevorzugt die Modelle lediglich in den Gewichten der neuralen Netze unterscheiden und die jeweilige Netzstruktur identisch ist.

8. Verfahren nach einem der vorstehenden Ansprüche, wobei das Trainieren jeweils eine vorgegebene Anzahl von Durchläufen umfasst und/oder solange erfolgt bis, ein vorgegebener maximaler Fehler unterschritten wird.

9. Verfahren nach einem der vorstehenden Ansprüche, wobei das Erfassen des mindestens einen Betriebsparameters und/oder das Bilden der mehreren Datenblöcke ein Normalisieren der Betriebsparameter umfasst.

10. Recheneinheit, die dazu eingerichtet ist, ein Verfahren nach einem der vorstehenden Ansprüche 1 bis 9 durchzuführen.

11. Computerprogramm, das eine Recheneinheit veranlasst, ein Verfahren nach einem der Ansprüche 1 bis 9 durchzuführen, wenn es auf der Recheneinheit ausgeführt wird.

12. Maschinenlesbares Speichermedium mit einem darauf gespeicherten Computerprogramm nach Anspruch 11.

## Claims

1. Method for monitoring operating states of a machine by means of models for operating parameters which model operating states such that operating parameters used as input values are recovered as output values of the model, wherein an error dimension is obtained by comparing the output values with the operating parameters that have been input, wherein training a model results in the model being iteratively changed such that an error determined by the error dimension is minimized, comprising the steps of
a) measuring at least one operating parameter of the machine during reference operation of the machine in order to obtain reference operating data pertaining to the machine, wherein the machine adopts at least two different reference states during the reference operation (110) ;
b) using the reference operating data to form a plurality of data blocks which each span data of the reference operating data within different first time periods (120);
c) training a first model for operating parameters on the basis of a first data block of the plurality of data blocks and determining an error limit of the first model (130) ;
d) applying the first model to a second data block of the plurality of data blocks and if, when said first model is applied to the second data block, an error of the first model is greater than the error limit of the first model, training a second model for operating parameters on the basis of the second data block and determining an error limit of the second model (140);
e) defining a model set which includes the first and the second model (150);
f) applying all of the models of the model set to a further data block of the plurality of data blocks and if, when said models are applied to the further data block, an error of at least one of the models from the model set is greater than the error limit of the respective model, training a further model for operating parameters on the basis of the further data block, determining an error limit of the further model and adding the further model to the model set (160);
g) repeating step f) for all further data blocks of the plurality of data blocks;
h) measuring the at least one operating parameter of the machine in normal operation, which is different from the reference operation, in order to obtain normal operating data pertaining to the machine, and using the normal operating data to form at least one third data block which spans data of the normal operating data from at least one second time period (180);
i) applying all of the models of the model set to the at least one third data block and determining that there is an abnormal state on the machine if, when said models are applied to the at least one third data block, an error for any of the models of the model set is greater than the error limit of the respective model (190).

2. Method according to Claim 1, wherein step i) involves:
outputting (192) that there is an abnormal state on the machine if it has been determined that there is an abnormal state.

3. Method according to either of the preceding claims, wherein the different first time periods and/or the at least one second time period each span the same predetermined duration.

4. Method according to one of the preceding claims, wherein the error limit of the models is determined by virtue of the error limit being set as a multiple of an error when this model is applied to the data block which was used to train it, wherein the multiple is preferably 5 times, more preferably 10 times.

5. Method according to one of the preceding claims, further involving
outputting the determined error limit of at least one model of the model set, preferably of all of the models.

6. Method according to one of the preceding claims, further involving
removing one of the models from the model set.

7. Method according to one of the preceding claims, wherein the models are artificial neural networks, preferably autoencoders; wherein the models preferably differ only in the weights of the neural networks and the respective network structure is identical.

8. Method according to one of the preceding claims, wherein the training in each case involves a predefined number of iterations and/or takes place until a predefined maximum error is not reached.

9. Method according to one of the preceding claims, wherein the measuring of the at least one operating parameter and/or the forming of the plurality of data blocks involves normalizing the operating parameters.

10. Computing unit configured to carry out a method according to one of preceding Claims 1 to 9.

11. Computer program which, when executed on a computing unit, causes the computing unit to carry out a method according to one of Claims 1 to 9.

12. Machine-readable storage medium having a computer program according to Claim 11 stored thereon.

## Revendications

1. Procédé de surveillance d'états de fonctionnement d'une machine au moyen de modèles pour des paramètres de fonctionnement, qui modélisent des états de fonctionnement de telle sorte que des paramètres de fonctionnement utilisés en tant que valeurs d'entrée sont récupérés en tant que valeurs de sortie du modèle, un indice d'erreur étant obtenu par une comparaison des valeurs de sortie avec les paramètres de fonctionnement entrés, lors d'un entraînement d'un modèle, le modèle étant modifié de manière itérative de telle sorte qu'une erreur déterminée par l'indice d'erreur est réduite au minimum, comprenant les étapes suivantes
a) acquisition d'au moins un paramètre de fonctionnement de la machine pendant un fonctionnement de référence de la machine afin d'obtenir des données de fonctionnement de référence de la machine, la machine adoptant au moins deux états de référence différents pendant le fonctionnement de référence (110) ;
b) formation de plusieurs blocs de données à partir des données de fonctionnement de référence, lesquels s'étendent respectivement sur des données des données de fonctionnement de référence à l'intérieur de premières périodes différentes (120) ;
c) entraînement d'un premier modèle pour des paramètres de fonctionnement en se basant sur un premier bloc de données des plusieurs blocs de données et détermination d'une limite d'erreur du premier modèle (130) ;
d) application du premier modèle sur un deuxième bloc de données des plusieurs blocs de données et, lorsqu'une erreur du premier modèle lors de l'application sur le deuxième bloc de données est supérieure à la limite d'erreur du premier modèle, entraînement d'un deuxième modèle pour des paramètres de fonctionnement en se basant sur un deuxième bloc de données et détermination d'une limite d'erreur du deuxième modèle (140) ;
e) définition d'un jeu de modèles qui contient le premier et le deuxième modèle (150) ;
f) application de tous les modèles du jeu de modèles sur un bloc de données supplémentaire des plusieurs blocs de données et, dans le cas où une erreur d'au moins l'un des modèles issu du jeu de modèles, lors de l'application sur le bloc de données supplémentaire, est supérieure à la limite d'erreur du modèle respectif, entraînement d'un modèle supplémentaire pour des paramètres de fonctionnement en se basant sur le bloc de données supplémentaire, détermination d'une limite d'erreur du modèle supplémentaire et ajout du modèle supplémentaire au jeu de modèles (160) ;
g) répétition de l'étape f) pour tous les blocs de données supplémentaires des plusieurs blocs de données ;
h) acquisition de l'au moins un paramètre de fonctionnement de la machine dans un fonctionnement normal, lequel est différent du fonctionnement de référence, afin d'obtenir des données de fonctionnement normal de la machine, et formation d'au moins un troisième bloc de données à partir des données de fonctionnement normal, lequel s'étend sur les données des données de fonctionnement normal d'au moins une deuxième période (180) ;
i) application de tous les modèles du jeu de données sur l'au moins un troisième bloc de données et détermination qu'un état anormal de la machine est présent lorsque, pour chacun des modèles du jeu de modèles, une erreur lors de l'application sur l'au moins un troisième bloc de données est supérieure à la limite d'erreur du modèle respectif (190).

2. Procédé selon la revendication 1, l'étape i) comprenant :
délivrance en sortie (192) de la présence d'un état anormal de la machine lorsqu'il a été déterminé qu'un état anormal est présent.

3. Procédé selon l'une des revendications précédentes, les différentes premières périodes et/ou l'au moins une deuxième période s'étendant respectivement sur la même durée prédéterminée.

4. Procédé selon l'une des revendications précédentes, la détermination de la limite d'erreur des modèles s'effectuant en spécifiant la limite d'erreur comme étant égale à un multiple d'une erreur lors de l'application de ce modèle sur le bloc de données avec lequel il a été entraîné, le multiple étant de préférence le quintuple, encore de préférence le décuple.

5. Procédé selon l'une des revendications précédentes, comprenant en outre
délivrance en sortie de la limite d'erreur déterminée d'au moins un modèle du jeu de modèles, de préférence de tous les modèles.

6. Procédé selon l'une des revendications précédentes, comprenant en outre
retrait de l'un des modèles du jeu de modèles.

7. Procédé selon l'une des revendications précédentes, les modèles étant des réseaux neuronaux artificiels, de préférence des autocodeurs ; les modèles se différenciant de préférence uniquement par les poids des réseaux neuronaux et la structure de réseau neuronal respective étant identique.

8. Procédé selon l'une des revendications précédentes, l'entraînement comportant respectivement un nombre prédéfini de passes et/ou s'effectuant jusqu'à ce que l'erreur devienne inférieure à une erreur maximale prédéfinie.

9. Procédé selon l'une des revendications précédentes, l'acquisition de l'au moins un paramètre de fonctionnement et/ou la formation des plusieurs blocs de données comprenant une normalisation des paramètres de fonctionnement.

10. Unité de calcul, laquelle est conçue pour mettre en œuvre un procédé selon l'une des revendications précédentes 1 à 9.

11. Programme informatique, lequel amène une unité de calcul à mettre en œuvre un procédé selon l'une des revendications 1 à 9 lorsqu'il est exécuté sur l'unité de calcul.

12. Support d'enregistrement lisible par machine sur lequel est enregistré un programme informatique selon la revendication 11.
